# EUROPEAN PATENT SPECIFICATION

(11) **EP 1 528 862 B1**
(45) Date of publication and mention of the grant of the patent: **19.05.2010**
(21) Application number: 03751866.9
(22) Date of filing: 14.08.2003
(51) Int. Cl.: A23L 1/00, A21D 13/08, A21D 13/00, A23L 1/164, A23L 1/36

(54) **METHOD OF MAKING A SHELF STABLE EDIBLE SNACK HAVING AN OUTER DOUGH LAYER**
VERFAHREN ZUR HERSTELLUNG EINES LAGERSTABILEN, ESSBAREN SNACKPRODUKTES MIT EINER ÄUSSEREN TEIGSCHICHT
PROCEDE POUR PREPARER UNE COLLATION COMESTIBLE DE LONGUE CONSERVATION ENROBEE D'UNE PATE

(30) Priority: 14.08.2002 US 403268 P
(43) Date of publication of application: 11.05.2005
(73) Proprietor: MARS, INCORPORATED, McLean, Virginia 22101-3883 (US)
(72) Inventor: SCHNIEBER, Joan, Belvidere, NJ 07823 (US); DOMBROSKI, Amy, Stanhope, NJ 07874 (US); BHATT, Jalaj, Basking Ridge, NJ 07920 (US)
(74) Representative: James, Anthony Christopher W.P.
(86) International application number: PCT/US2003/025783
(87) International publication number: WO 2004/016103

(56) References cited:
- EP-A- 1 036 504
- WO-A-94/18858
- GB-A- 2 363 049
- US-A- 4 661 360
- US-A- 4 663 175

## Description

### BACKGROUND OF THE INVENTION

### Field of the Invention

The present invention is directed to edible snack foods. More particularly, the present invention is directed to shelf stable edible snack foods that comprise an edible core that is substantially covered by an outer dough layer.

### Related Background Art

Snack foods are popular items that many consumers like. Consumers buy them as treats for themselves or for their pets. One of the reasons why they are so appealing is that they generally taste good. Many snacks are also designed to have a convenient serving size, which consumers also like. Another positive attribute is that they require little to no preparation time, making them for the most part, ready-to-eat.

Snacks are available in a variety of forms and are made in a variety of ways. One particular type of snack is designed with a center filling that is surrounded by an outer shell. These snacks may be made by processes that include enrobing and extruding. Often, these snacks are coextruded, where an outer shell surrounds a central core of material. Coextruded snacks have wide appeal because of the unique combining of texture, composition, color, or flavor between the central core from the outer shell material. Often, the shell and core materials are processed in separate extruders. The separate materials are then extruded through concentric dies in a die plate mounted across the discharge end of one of the extruders. Typically the two extruders are positioned perpendicular to one another, with the discharge ends of the extruders abutting one another. One of the materials is extruded and forms the outer shell portion, which is a hollow rope. The other material is extruded simultaneously into the hollow portion of the outer shell rope, forming the center filling. This process requires significant capital investment in equipment and is difficult to maintain and operate, making it an undesirable way to manufacture a snack food product. Moreover, some ingredients and components that are sticky or difficult to handle are difficult to extrude.

Thus, a simpler method of applying an outer layer over a food core to manufacture snack foods is desired. WO-A-9418858 describes a method fur continuous preparation of edible cores having a crisp, farinaceous coating. Multiple layers of dough are applied over an edible core through a series of drums. During coating, the cores repeatedly tumble through nonoverlapping parallel wet and dry zones. A liquid coal of water and sugar is applied in the wet zone while in the dry zone the cores are continuously dusted with farinaceous powder. The coated edible cores are then cooked until crisp.

US-A-4663175 describes a method for making a flavoured nut product that proceeds by coating nut centers with alternating layers of a liquid and solid mixture. The nut centers are successively coated with the liquid and solid portions, and arc subsequently fried.

GB-A-2363049 describes a food product having a higher-water component (filling), surrounded by a barrier layer, all encased in a lower-water component such as a dough.

US-A-4661360 describes a snack product containing a heat-stable filling containing 40-70% fat (preferably peanut butter) encased in a baked dough shell. A barrier layer of an edible hydrophilic material is provided between the filling and the shell.

EP-A-1036504 describes a snack bar comprising 30-90% cream cheese-like filling and a baked dough crust.

The present invention provides a method of making a shelf stable edible snack, comprising the steps of: (A) providing an edible core having an outside surface; and (B) applying at least on outer dough layer that substantially covers said outside surface of said edible core; wherein said outer dough layer has a water activity of 0.2 to 0.8 at 25°C and is applied by a method comprising the steps of: (a) coating said outside surface of said edible cure with a base liquid, thereby forming a liquid coated core; (b) applying a dry component having flour to said liquid coated core, thereby forming an edible layered component; and (c) optionally, (i) drying said liquid coated core after step (a), (ii) drying said edible layered component after step (b), or (iii) drying said edible layered component after steps (a) and (b) ; and (d) cooking to form said shelf stable edible snack, wherein at least a portion of said dry component is treated to a roasting step before said step of applying.

In a further aspect, the present invention provides a shelf stable edible snack obtainable by a process according to the present invention, comprising: an edible core selected from the group consisting of : nuts, nut derivatives, meats, meat derivatives, fruits, fruit derivatives, cookie bits, crackers, cheese, cheese derivatives, legumes, yogurts, yogurt derivatives, tomato sauces, vegetables, vegetable derivatives, confectioneries, and mixtures thereof; and an outer dough layer that is flour based, said outer dough layer having a minimum of 50 wt. % flour and less than 50 wt. % sucrose based on the total weight of the outer dough layer, wherein said outer dough layer substantially surrounds said edible core and said outer dough layer after cooking has a water activity from 0.2 to 0.8 at a temperature of 25°C, and wherein said shelf stable edible snack is microbiologically stable for at least 2 months.
an outer dough layer that is flour based, said outer dough layer having a minimum of 50 wt. % flour and less than 50 wt. % sucrose based on the total weight of the outer dough layer,
wherein said outer dough layer substantially surrounds said edible core and said outer dough layer after cooking has a water activity from 0.2 to 0.8 at a temperature of 25°C, and wherein said shelf stable edible snack is microbiologically stable for at least 2 months.

### DETAILED DESCRIPTION OF THE INVENTION

The present invention provides a novel method for making a shelf stable edible snack that has an edible core and a dough layer, e.g., bread. The outer dough layer is applied in a unique way, where the outer layer is applied as a coating. In a preferred embodiment, the outer dough layer, e.g., bread, grain, muffin, cookie, cake, or other variant is separated into two components, and applied as a separate liquid and a separate dry component. The combination of the two components forms a layer of food over the edible core surface. This makes the outer dough layer of the invention somewhat unique and different from conventional dough, which has been subjected to mixing and/or kneading. This new and unique method of making a food snack is particularly useful when making a product that has a soft, sticky, or tacky outer layer and provides a unique texture.

The term "shelf stable" is understood to mean that the product has a microbiologically stable shelf life and/or an organoleptic stable shelf life of at least about 2 months when subjected to environmental conditions where the temperature is 4.4°C (40 °F) to 27°C (80 °F) and the relative humidity is 25% to 75%. That is, the shelf stable edible snack does not experience microbiological spoilage under these conditions and/or is organolepitcally stable under these conditions. More preferably, the environmental conditions are such that the temperature is 13°C 55 °F to 18°C 65 °F and the relative humidity is 50% to 60%. The shelf life of the shelf stable edible snack is preferably at least about 6 months. More preferably, at least about 9 months. Preferably, the shelf stable edible snack is microbiologically stable without the use of preservatives.

Staling of products is well recognized in the industry as a major issue. The shelf stable edible snack is desirably essentially free of staling for at least 2 months, preferably at least 6 months, and most preferably at least 9 months. The degree of staling is determined by performing a degree of difference test using a trained sensory panel. A scale from 1 to 6 is used. Products rated a 1 are said to be identical to product initially made. A rating of 3 indicates that them is a perceivable difference. A rating of 4 or more indicates a strong difference.

In one embodiment, the shelf stable edible snack is a bite sized snack. The term "bite sized" is used herein to denote products that resemble and/or are similar to normal sized products, but are sized so that the whole product or most of the product can be conveniently placed inside a consumer's mouth. Bite sized products often tend to be 1 to 6 cm in length.

The method of the present invention comprises the step of applying at least one dough layer that substantially surrounds or covers the edible core, wherein the dough layer is applied by coating the surface of the edible core with a base Liquid. This is followed by applying a dry component onto the liquid coated core. In addition, one or more drying steps may be included. Drying may be performed after the surface of the edible core is coated with the base liquid or after app lying the dry component to the liquid coated core, or after each step. Whether the drying step is needed or not will be determined by factors such as the ingredients, product design, and process conditions. Moreover, the base Liquid and dry component may be applied multiple times in order to build up the thickness of the outer dough layer. Alternatively, the thickness of the exterior surrounding the edible core may be built up by coating the edible layered component with a second liquid and if so desired, applying a second dry component onto the liquid coated component. These steps can be repeated as often as needed to develop the desired outer layer thickness.

The outer dough layer has a water activity of 0.2 to 0.8 at 25 °C.

The shelf stable edible snack of the present invention is preferably made using a coating process. The process applies a base liquid onto the surface of the edible core, which substantially covers the surface of the edible core. This is followed by applying a dry component onto the somewhat tacky surface or the edible core. The dry component should be applied in a manner that facilitates even coverage of the piece. For example, in a panning operation, the pan would be charged with the edible cores. As the pan rotates at a preset number of revolutions per minutes, the edible cores move around in a tumbling fashion. A measured amount of a base liquid is applied onto the edible cores. The mixing created by the tumbling action distributes the base liquid over the edible core pieces. Next, a dry component, such as flour, is applied over the liquid coated edible core pieces. Again, the tumbling action is used to spread the dry component over the edible core pieces. In a preferred embodiment, one or more drying steps are included. Drying may be performed after the edible core pieces are liquid coated and/or after the dry component is applied. Typically, conditioned air, i.e. air at a controlled temperature and humidity, is introduced into the apparatus/equipment to facilitate drying.

Equipment suitable for performing coating operations include, coating pans, mixing vessels, coating tubes, fluidized bed dryers, and the like.

The edible core may be any food product or a combination or two or more components. Non-limiting examples include muts, nut derivatives (e.g., peanut butter), meats, meat derivatives (e.g., pepperoni, spam), fruits, fruit derivatives (e.g., jelly), cookie bits, crackers, cheese, cheese derivatives (e.g., imitation cheese), legumes, yogurts, yogurt derivatives (yogurt powder), tomato sauces, vegetables, vegetable derivatives (e.g., sun dried tomato), confectioneries, and mixtures thereof. In addition, the edible core may be formed by any suitable process. For example, starch molding, roll depositing, extrusion, coextrusion, layering, and coating are just some of the processes that may be utilized or combined together.

In one particular embodiment, the edible core is formed by applying a food coating around a central core. The coating may be applied by any suitable method For example, the central core may be a meat filling, which is then coated with a cheese coating. The resulting component would then be used as the edible core of the present invention. It should be understood that more than one coating may be applied over the central core in order to form the edible core.

The thickness of the outer dough layer may be built up by applying a second liquid over the layered edible cores. This is usually followed by applying a second dry component onto the wetted liquid coated cores. These steps are repeated until the desired thickness is achieved. In one embodiment, these steps are repeated from about 1 to about 25 times.

The second liquid maybe the same or different from the base liquid. The same is true for the second dry component. That is, the second dry component may be the same or different from the dry component. If the second liquid and the second dry component are the same as the base liquid and the dry component, then the application of these materials will build up the thickness of the layer. If either one of the second liquid or the second dry component are different from the base liquid or the dry component, then the application of these materials results in a new layer.

In one particular embodiment, the dough layer is formed by adapting a "Sponge Method" to the dough forming process. Using the Sponge Method, a sponge is formed by combining yeast, water, and a portion of the flour, and holding the sponge mixture for about 0 minutes to about 60 minutes, which allows the yeast to develop, as the yeast feeds off the flour. Typically, less than about 5 wt.% of the total weight of flour that is used in the outer dough layer is used to make the sponge. The sponge mixture is then used as either the base Liquid or second liquid that is applied onto the edible cores. For example, the process may involve the steps of (a) applying a base liquid comprising a humectant such as glycerin and water to the edible cores, (b) applying dry components, (c) applying a second liquid comprising flour, yeast, and water, and (d) another application of dry components. Steps (a) through (d) are repeated until a dough layer of the desired thickness is formed. The advantage of the sponge method is that glycerin, which can impede the development of the yeast, can be kept separate from the yeast. Alternatively, the base liquid and the second liquid may be switched, so that the base liquid is comprised of yeast, flour and water, and the second liquid contains glycerin and water. In addiction, drying steps may be incorporated after any of steps (a), (b), (c) and/or (d). Optionally, butter and/or oil may be included in the sponge mixtures. The Sponge method can also be modified so that glycerin can be combined with the sponge mixture just prior to applying the mixture onto the edible cores, and then the dry components would be applied.

The thickness of the outer dough layer is determined by product design requirements. In general, the thickness of the outer dough layer is from about 1 mm to about 6 mm, preferably between about 1 mm to about 3 mm, and more preferably between about 1 mm to about 2 mm.

As stated above, the outer dough layer is formed by applying a base liquid and then applying a dry component. This may be performed using a batch, semi-batch or continuous process. The base liquid is comprised of glycerin, salt, and a liquid carrier, such as water and/or corn syrup. Preferably, pre-gelatinized starch is added to the base liquid to give it a batter like consistency. The base liquid may also contain flavorings, colorings, texturizers, vitamins, minerals, and the like.

The dry component is comprised of flour. Any type of flour may be used. Other ingredients which may be added inclucle, but are not limited to, emulsifiers, enzymes, flavorings, colorings, texturizers, vitamins, minerals, and the like. The present inventors have discovered that by roasting a portion or all of the dry component, flavor attributes are developed in the dry component. It appears that roasting a portion or all of the dry component imparts a significant amount of flavor into the dry component and as the dough layer is applied, cooked flavor is already present. Another advantage of including the roasting step is that if the shelf stable edible snack is to be cooked, it may reduce the cooking time. Moreover, a shorter cooking time has the added benefit of reducing the incidence of liquid bleeding from the edible core into or out of the outer dough layer. This means that a higher quality end product can be produced.

In a particular embodiment, the outer dough layer has a minimum of 50 wt.% flour, preferably at least 55 wt.%, more Preferably at least 60 wt.%, even more preferably at least 65 wt.%, still even more preferably at least 70 wt.%, yet even more preferably at least 75 wt.%, and most preferably at least about 80 wt.% flour.

The outer dough layer has less than 50 wt.% sucrose, preferably less than 45 wt.%, more preferably less than 40 wt.%, even more preferably less than 35 wt.%, still even more preferably less than 30 wt%, yet even more preferably less than 25 wt.%, and most preferably less than 20 wt.% sucrose.

The shelf stable edible snack may be subjected to a cooking step after the outer dough layer is applied. Any suitable means of cooking may be used. For example, the shelf stable edible snack may be cooked by baking, microwaving, frying, steaming, boiling, broiling, roasting, drying, dielectric heating, ultrasonic heating, high pressure low temperature heating, and the like. Preferably, the shelf stable edible snack is baked in an oven that tumbles the shelf stable edible snack as it is bering baked. This may be accomplished by positioning a rotating apparatus, e.g., drum, inside an oven or by designing an oven that rotates as it heats the product. The tumbling action assists in cooking the shelf stable edible snack evenly. In a preferred embodiment, the cooking step is a baking step which is performed at a temperature of from 135 °C to 235 °C, preferably from 176 °C to 204 °C, for a period of less than 15 minutes, preferably 2 minutes to 10 minutes.

In one particularly preferred embodiment, the shelf stable edible snack is subjected to a freezing step before cooking, e.g., baking. Applicants have found that when the shelf stable edible snack pieces are frozen to a temperature of -10 °C to -40 °C, the cooking step may be performed at a higher temperature for a shorter period of time. A preferred frozen temperature is -30 °C to -20 °C. In the frozen state, the outer dough layer can be rapidly baked at a higher temperature, white minimizing the exposure of the edible core to high temperature effects. For example, the shelf stable edible snack pieces may be frozen for two hours and then baked at from 135 °C to 235 °C for a period of less than 12 minutes. Preferably the frozen snack is baked at a temperature from 175 °C to 235 °C, for 3 minutes to 10 minutes.

The shelf stable edible snack may take the form of various shapes as required by the product design. However, it is preferred that the shelf stable edible snack have a substantially spherical shape or lentil shape. This is desirable because a spherical or lentil shape facilitates the application of an even outer layer coating surrounding the edible core.

Moreover, the shelf stable edible snack may be further shaped prior to or after the cooking step. The product may be manipulated using any means necessary to obtain the desired shape. In one example, a shelf stable edible snack may be compressed in a mold, giving it a sandwich shape.

Additional processing steps may be utilized to facilitate processing For example, a non-sticking agent, such as flour, may be introduced into the coating apparatus prior to or after introducing the edible core pieces. The non-sticking agent reduces the sticking between the edible core pieces. Another beneficial step that may be included is to freeze or chill the edible core pieces prior to applying the liquid and/or dry component. This helps maintain the shape of the pieces during processing.

In another aspect of the present invention, the outer dough layer provides the shelf stable edible snack with a unique texture. This is a result of the layer that is gradually built up during the coating process that is used to apply the outer dough layer. The shelf stable edible snack may have an outer dough layer with a soft texture, or if the shelf stable edible snack is cooked, the texture of the outer dough layer may be crunchy, flaky, or breadlike. In one embodiment, the outer dough layer is applied creating a filo dough layer, which when baked, creates a fluffy multilayered crust. In another embodiment, the outer dough layer is a bread or breadlike with spices, herbs, meat, and or cheese added.

The color of the shelf stable edible snack is typically golden brown. However, it should be understood that the shelf stable edible snack may be colored as need be to satisfy product design requirements.

The size of the shelf stable edible snack is also largely determined by product design requirements. In general, the weight of the edible snack is about 5 to about 20 grams, with the edible core weighing about 3 to about 15 grams and the outer dough layer about 5 to about 17 grams.

In an alternative embodiment, the method for making a shelf stable edible snack comprises the steps of: (A) providing an edible core having an outside surface; and (B) applying at least one outer dough layer that substantially covers the outside surface of the edible core, wherein the outer dough layer is applied by coating the edible core with a liquid suspension comprising flour, glycerin, salt, and a liquid carrier, such as water and/or corn syrup. In a preferred embodiment, the outer dough layer has a water activity of less than about 0.8 at 25 °C.

Optionally, the liquid coated edible component may be further processed by applying additional applications of the liquid suspension onto the edible component. Preferably, from about 1 to about 25 applications are applied.

The base liquid of the present invention is typically applied first to impart a tacky texture to the surface of the edible core. This makes application of the dry component more successful. Ingredients such as glycerin, salt, and a liquid carrier, e.g., corn syrup, and/or water, typically make up the base liquid. Preferably, the base liquid is comprised of at least one ingredient selected from the group consisting of corn syrup, water, glycerin, salt, fat, fruit juices, fruit purees, emulsifiers, colors, flavors, and mixtures thereof.

Corn syrup may be included in the base liquid to raise the solids content. Not all corn syrups have the same composition, in fact, there is a considerable range depending primarily on the extent of hydrolysis used in their preparation. In the present invention, the corn syrup preferably has a dextrose equivalent (DE) of about 4 to 68, more preferably about 30 to 50. Corn syrups have a characteristic flavor of their own, and if used in excessive amounts they may interfere with the flavor of the shelf stable edible snack. If corn syrup is included, it is from about 0 wt.% to about 25 wt.% of the total weight of the base liquid. Preferably, from about 5 wt.% to about 25 wt.%.

The outer dough layer of the shelf stable edible snack is design to be a cracker, a bread, a cookie, a muffin, a granola, a cereal, a soft pretzel, or mixture thereof. Typically, ingredients such as, flour, starch, humectants, dough conditioners, enzymes, emulsifiers, yeast, chemical leavening agents, fat, preservatives, and sugar may be used to form the outer dough layer. In a preferred embodiment, the dry component is fat based, dough based, dairy based, protein based (e.g., nut meats), grain based, or a mixture thereof.

The dry component is comprised of at least one ingredient selected from the group consisting of flour, baking powder, milk powder, sugar, starch, protein, gums, enzymes, cheese powder, salt, soluble fiber, insoluble fiber, vitamins, minerals, leavening conditioners, dough conditioners, and mixtures thereof. Particularly preferred enzymes are those enzymes that have an anti-staling affect on the product.

Suitable starches include, but are not limited to cereal grains, legumes, tubers and roots, maltodextrins obtained from the partial hydrolysis of starch, glycogen, native, unmodified starches, pre-gelatinized starches, chemically modified starches, high amylose starches, waxy starches, and mixtures thereof.

In a preferred embodiment, the outer dough layer is bread or breadlike. Even more preferred, the bread or breadlike layer has a flavor, such as grape flavor. This may be achieved by including a flavorant in the outer dough layer formulation.

Optionally, a barrier may be applied around the edible core before applying the outer dough layer. For example, a film coating of hydroxy propyl methyl cellulose may be applied around the edible core to help protect the integrity of the edible core from heat during processing. Additionally, the edible core itself, may include hydroxy propyl methyl cellulose.

In a preferred embodiment, vitamins and/or process sensitive components, e.g., heat sensitive ingredients, are incorporated into the shelf stable edible product in either the edible core or in a separate layer that surrounds at least a portion of the edible core. By incorporating these components in this way, preservation of the components can be achieved, while minimizing impact to the flavor and texture of the product.

Moreover, the edible core may contain protein based components such as egg whites and the like.

Optionally, the shelf stable edible snack may include preservatives, stabilizers, flavors, and the like.

The product design of the shelf stable edible snack and the selection of the processing method that will be employed will largely determine the application size of the base liquid and the dry component that is applied for forming the outer dough layer.

The weight ratio of the outer dough layer to the edible core will be dependent upon product design requirements. As a general guideline, the weight ratio is about 0.5:1 to about 6:1, preferably about 0.75:1 to about 5:1, and most preferably about 1:1 to about 4:1. In a preferred embodiment, the outer dough layer to edible core ratio is about 1:1.

The total moisture content, i.e. water content, of the shelf stable edible snack is from about 2% to about 30%, preferably from about 10% to about 23 %, and more preferably from about 13% to about 17%.

In order to prevent microbiological spoilage of the shelf stable edible snack, it is important that the water activity of the edible core and the outer dough layer be controlled during manufacturing. For the purposes of this application, the water activity is defined as the vapor pressure of a composition divided by the vapor pressure of pure water under the same conditions. In the present invention, the water activity of the shelf stable edible product is designed to be sufficiently low enough, e.g., less than 0.85, to prevent the growth of most pathogenic and spoilage bacteria. To inhibit the growth of molds and yeast, the water activity of the shelf stable edible product is ideally less than about 0.8.

The water activity of the edible core after cooking is less than about 0.8 at 25°C. Preferably, the water activity at 25 °C is from about 0.2 to about 0.8, more preferably from about 0.4 to about 0.75, even more preferably from about 0.5 to about 0.7, and most preferably from about 0.55 to about 0.65.

The outer dough layer after cooking has a water activity that is from 0.2 to 0.8, preferably from 0.4 to 0.75, more preferably from 0.5 to 0.7, and most preferably from 0.55 to 0.65.

The amount of water that is in the outer dough layer prior to cooking is from about 9 wt.% to about 16 wt.%. Preferably from about 10 wt.% to about 15 wt.%, more preferably from about 11 wt.% to about 14 wt.%, and most preferably from about 12 wt.% to about 13 wt.% of the outer dough layer is water.

In a preferred embodiment, the process used to make the outer dough layer of the invention requires less water than a conventional dough making process. This can be demonstrated by calculating a dry component to wet component (D/W) ratio for the dough. For example, a dough formed using a conventional process, which includes mixing and kneading steps, has a D/W ratio of about 1.6:1. In contrast, the outer dough layer formed by the process of the invention, where a base liquid is applied followed by dry components has a D/W ratio of about 2.4. A higher D/W ratio indicates that less water is required to make the dough.

The fat content of the shelf stable edible snack is from about 7% to about 30%, preferably from about 10% to about 20%, and most preferably from about 10% to about 18% based on the total weight of the shelf stable edible snack.

The outer dough layer has a fat content of from about 1% to about 10%, preferably, from about 3% to about 7%, and more preferably from about 5% to about 8%.

To extend the shelf life of the shelf stable edible snack, a packaging step may be included. The packaging step may involve nitrogen flushing to purge gases from the package. In addition, the package itself may be designed using high oxygen and/or high moisture barrier materials. For example, a multilayer structure providing high moisture and guaranteed oxygen barrier properties and/or a lamination with good hot tack and excellent sealing through particulate matter may be used.

It is desirable that the shelf stable edible snack be food like, much like a sandwich. Thus, it is particularly preferred that the shelf stable edible snack have an edible core comprised of meat or meat derivatives, surrounded by a bread or breadlike dough. For example, the shelf stable edible snack may have an edible core made of ham and an outer layer of bread. More preferably, the edible core may contain ham and cheese, while the outer dough layer is designed to be a bread or bread like.

Non-limiting examples of the shelf stable edible snack include, a peanut core with a surrounding cracker layer, a ham jerky core with an outer cheese layer, a jelly core surrounded by peanut butter that is surrounded by a bread, cracker, or biscuit layer, a peanut butter core with an outer jelly layer that is surrounded by a bread, cracker, or biscuit layer, a jelly core with a cream cheese derivative layer that is surrounded by a bread, cracker, or biscuit layer, a pepperoni core surrounded by a cracker, a shelf stable meat core (e.g., ham, beef jerky) with a bread, cracker, or biscuit layer, a cheese core surrounded by a bread, cracker, or biscuit layer, a fruit piece core surrounded by a cracker, cookie, muffin, granola, or grain layer, a cookie with an outer caramel layer, and the like. In a particularly preferred embodiment, the shelf stable edible snack has an edible core made of ham and cheese, which is surrounded by a dough layer of bread.

The outer dough layer may also be treated with a caustic solution, such as sodium hydroxide, and salt. Upon baking, the treated outer dough layer develops a pretzel like texture.

The shelf stable edible snack of the present invention preferably has a caloric density of about 1.5 to about 5 calories per gram. Preferably, the caloric density is about 2 to about 4 calories per gram.

It should be understood that the shelf stable edible snacks of the present invention are designed for human or animal consumption.

The following non-limiting examples provide formulation guidelines for making a whole grain sweet dough, a soft pretzel, and a whole wheat or white bread dough.

### EXAMPLE 1

### Whole grain sweet dough

### Dry Components

| Ingredient | % |
|---|---|
| Toasted soft wheat flour | 50 - 80 |
| Toasted whole oats with brown sugar | 10 -3 0 |
| Wheat Germ | 10 - 30 |
| Flour Salt | 0 - 1 |

### Wet Components

| Ingredient | % |
|---|---|
| Water | 20 - 50 |
| Corn Syrup or equivalent | 20 - 70 |
| Canola Oil, Anhydrous milk fat, | 0 - 5 |
| Glycerin | 10-30 |
| Hydroxy Propyl Methyl Cellulose | 10 - 30 |
| Vanilla Extract Flavor (optional) | 0 - 3 |

### Pre toast/roast procedure

Toast/Roast flour in an oven that has been preheated to a temperature of 176.7 °C (350 °F) for 40 minutes, turning every 10 minutes to a golden brown color. Optionally, milk powder and/or sugar may be included.

### Panning procedure

1. Apply pastry flour to pan and add frozen edible cores.
2. Apply film coat of HPMC and pastry flour to frozen edible cores.
3. Refreeze to -23.3 °C to - 40 °C (-10 °F to - 40 °F) for 10 - 20 minutes.
4. Apply alternating applications of dry and wet ingredients at a 1.8:3 ratio.
   Note: Application size will be determined by the final ratio of the edible core to liquid to dry component. Preferably the ratio is 1:0.5:0.5.
5. Bake at 162.8 °C (325 °F) for 2 minutes, cool for 5 minutes, then bake an additional 2 minutes.
6. Optionally, fruit pieces can be substituted for the toasted oats to make a muffin coating.

Example: Blue Berry Muffin containing blueberry pieces in dough.

### EXAMPLE 2

### Soft Pretzel

### Dry Components

| Ingredient | % |
|---|---|
| Soft wheat flour | 60 - 80 |
| Shell Dry Mix MFUSA Spec 04201* | 5 - 15 |
| Instant Gum 49345 CNI | 5 - 15 |
| Flour Salt | 0 - 1 |

### Wet Components

| Ingredient | % |
|---|---|
| Water | 20 - 50 |
| High Fructose Corn Syrup | 0 - 10 |
| Canola Oil | 0 - 5 |
| Glycerin | 10 - 30 |
| Hydroxy Propyl Methyl Cellulose | 10 - 30 |
| Lecithin | 0.1 - 1 |
| Caustic (Sodium Hydroxide Solution 1-2%) | 0.1 - 1 |
| Yeast, Flour, Water, and Butter | 0-5 |

| | |
|---|---|
| *Combination of modified starch, dextrose monohydrate, sodium bicarbonate, sodium acid pyrophosphate, salt, hydrogenated soybean oil, L-cystcinc hydrochloride, diacetyl tartaric acid ester of monoglyceride | |

### Pre toast/roast procedure

Toast flour in 176.7 °C (350 °F) preheated oven for 40 minutes, turning every 10 minutes to a golden brown color. Optionally, milk powder and/or sugar may be included.

### Panning procedure

1. Apply pastry flour to pan and add frozen edible cores.
2. Optionally, apply a film coating of HPMC and pastry flour to the frozen edible cores.
3. Refreeze to 23.3 °C to 40 °C (-10 °F to - 40 °F) for 10 - 20 minutes.
4. Apply alternating applications of dry and wet ingredients at a 1.8:3 ratio.
   Note: Application size will be determined by the final ratio of the edible core to liquid to dry component. Preferably the ratio is 1:0.5:0.5.
5. Apply caustic solution.
6. Bake at 162.8 °C (325 °F) for 2 minutes, cool for 5 minutes, then bake an additional 2 minutes.

### EXAMPLE 3

### Whole wheat or white bread dough

### Dry Components

| Ingredient | % |
|---|---|
| Toasted soft wheat flour | 20 - 80 |
| Unbleached flour | 0 20 |
| Non Fat Dry Milk powder | 20 - 40 |
| Dextrose | 0 - 5 |
| Herbecal Citrus Fiber | 0 - 5 |
| Hydroxy Propyl Methyl Cellulose | 10 - 30 |
| Potato Flakes | 0 - 10 |
| Flour Salt | 0 - 1 |
| Chemical Leavening Agents | 0 - 5 |

### Wet Components

| Ingredient | % |
|---|---|
| Water | 5 - 50 |
| High Fructose Corn Syrup | 0 - 10 |
| Canola Oil | 0 - 10 |
| Glycerin | 10-30 |
| Emulsifiers (Lecithin, Panodan SDK, Grinstad | 0 - 20 |
| IFF fermented dough flavor (optional) | 0 - 3 |
| Yeast Leavening | 0 - 5 |

### Pre toast procedure

Toast flour in 176.7 °C (350 °F) preheated oven for 40 minutes, turning every 10 minutes to a golden brown color. Optionally, milk powder and/or sugar may be included.
1. Panning procedure 1. Apply pastry flour to pan and add frozen edible cores.
2. Optionally, apply a film coating of HPMC and pastry flour to the frozen edible cores.
3. Refreeze to -23.3 °C to - 40 °C (-10 °F to - 40 °F) for 10 - 20 minutes.
4. Apply alternating applications of dry and wet ingredients at a 1.8:3 ratio.
   Note: Application size will be determined by the final ratio of the edible core to liquid to dry component. Preferably the ratio is 1:0.5:0.5.
5. Bake at 162.8 °C (325 °F) for 2 minutes, cool for 5 minutes, then bake an additional 2 minutes.
6. Optionally, whole-wheat flour may be substituted for the soft flour. The dough may also include herbs and spices for pizza.

### EXAMPLE 4

Samples 1 through 6 are doughs that were made using the process of the invention described in Example 1. The percent gelatinization of starch was measured using iodine complexation/spectrophotometry.

| | | % Gelatinized Starch |
|---|---|---|
| Sample | 1 | 1.36 |
| | 2 | 1.70 |
| | 3 | 2.08 |
| | 4 | 1.94 |
| | 5 | 1.69 |
| | 6 | 1.61 |

### COMPARATIVE EXAMPLE 1

Samples of conventional doughs were made by conventional dough making procedures, using the same flour source as in Example 4. The percent gelatinization was measured using iodine complexation/spectrophotometry.

| | | % Gelatinized Starch |
|---|---|---|
| Comp. Sample | 1 | 5.21 |
| | 2 | 3.31 |
| | 3 | 2.75 |
| | 4 | 3.53 |
| | 5 | 4.39 |
| | 6 | 3.86 |
| | 7 | 3.62 |

The measurement of the present gelatinization shows that the process used to manufacture Sample Doughs 1 through 6 of the invention have a much lower percent gelatinization than the dough samples made using conventional methods (mixing and kneading) as exemplified by the higher values for the percent gelatinization in Comparative Samples 1 through 7.

## Claims

1. A method of making a shelf stable edible snack, comprising the steps of :
(A) providing an edible core having an outside surface; and
(B) applying at least one outer dough layer that substantially covers said outside surface of said edible core; wherein said outer dough layer has a water activity of 0.2 to 0.8 at 25°C and is applied by a method comprising the steps of:
(a) coating said outside surface of said edible core with a base liquid, thereby forming a liquid coated core;
(b) applying a dry component having flour to said liquid coated core, thereby forming an edible layered component; and
(c) optionally, (i) drying said liquid coated core after step (a), (ii) drying said edible layered component after step (b), or (iii) drying said edible layered component after steps (a) and (b) ; and (d) cooking to form said shelf stable edible snack,
wherein at least a portion of said dry component is treated to a roasting step before said step of applying.

2. The method of claim 1, wherein said outer dough layer has a water activity of 0.4 to 0.75 at 25°C.

3. The method of claim 1, further comprising step (e) coating said edible layered component with a second liquid and step (f) applying a second dry component to said liquid coated component of step (e).

4. The method of claim 3. further comprising step (g) drying said liquid coated core after step (e) and/or drying said edible layered component after step (f).

5. The method of claim 1, wherein said base liquid is comprised of glycerin, salt, a liquid carrier, and pre-gelatinized starch.

6. The method of claim 1, wherein said dry component is fat based, dough based, dairy based, protein based, grain based, or mixtures thereof.

7. The method of claim 1, wherein said dry component is comprised of flour, emulsifiers, and enzymes.

8. The method of claim 1, wherein said cooking step (d) is performed by baking at a temperature of from 135°C to 235°C for a period of less than 15 minutes.

9. The method of claim 8, further comprising the step of freezing said shelf stable edible snack prior to said baking step.

10. The method of claim 1, wherein said edible core is selected from the group consisting of nuts, nul derivatives, meats, meat derivatives, fruits, fruit derivatives, cookie bits, crackers, cheese, cheese derivatives, legumes, yogurts, yogurt derivatives, tomato sauces, vegetables, vegetable derivatives, confectioneries, and mixtures thereof.

11. The method of claim 1, wherein said edible core has a water activity that is less than 0.8 at a temperature of 25°C.

12. The method of claim 1, wherein said outer dough layer is selected from the group consisting of a cracker, bread, cookie, muffin, granola, cereal, soft pretzel, and mixtures thereof.

13. The method of claim 1, wherein said base liquid comprises flour, yeast, and water.

14. A shelf stable edible snack obtainable by a process according to claim 1, comprising:
an edible core selected from the group consisting of: nuts, nut derivatives, meats, meat derivatives, fruits, fruit derivatives, cookie bits, crackers, cheese, cheese derivatives, legumes, yogurts, yogurt derivatives, tomato sauces, vegetables, vegetable derivatives, confectioneries, and mixtures thereof; and
an outer dough layer that is flour based, said outer dough layer having a minimum of 50 wt. % flour and less than 50 wt. % sucrose based on the total weight of the outer dough layer,
wherein said outer dough layer substantially surrounds said edible core and said outer dough layer after cooking has a water activity from 0.2 to 0.8 at a temperature of 25°C, and wherein said shelf stable edible snack is microbiologically stable for at least 2 months.

15. The shelf stable edible snack of claim 14, wherein said outer dough layer after cooking has a water activity from 0.4 to 0.75 at a temperature of 2.5°C.

16. The shelf stable edible snack of claim 14, wherein said outer dough layer is comprised of flour, starch, humectant, dough conditioner, enzyme, emulsifier, yeast, chemical leavening agent, fat, preservative, and sugar.

## Patentansprüche

1. Verfahren zum Herstellen eines lagerstabilen, essbaren Snackprodukts, welches die Schritte umfasst:
(A) Bereitstellen eines essbaren Kerns mit einer äußeren Oberfläche; und
(B) Auftragen wenigstens einer äußeren Teigschicht, die die äußere Oberfläche des essbaren Kerns im wesentlichen abdeckt, wobei die äußere Teigschicht eine Wasseraktivität von 0,2 bis 0,8 bei 25°C aufweist und durch ein Verfahren aufgetragen wird, das die Schritte umfasst:
(a) Beschichten der äußeren Oberfläche des essbaren Kerns mit einer Basisflüssigkeit, wodurch ein mit Flüssigkeit beschichteter Kern gebildet wird;
(b) Auftragen einer trockenen Komponente mit Mehl auf den mit Flüssigkeit beschichteten Kern, wodurch eine essbare beschichtete Komponente gebildet wird; und
(c) optional (i) Trocknen des mit Flüssigkeit beschichteten Kerns nach Schritt (a), (ii) Trocknen der essbaren beschichteten Komponente nach Schritt (b) oder (iii) Trocknen der essbaren beschichteten Komponente nach Schritten (a) und (b); und (d) Garen, um das lagerstabile, essbare Snackprodukt zu bilden,
wobei wenigstes ein Teil besagter trockener Komponente in einem Röstschritt vor dem Schritt des Auftragens behandelt wird.

2. Verfahren nach Anspruch 1, wobei die äußere Teigschicht eine Wasseraktivität von 0,4 bis 0,75 bei 25°C aufweist.

3. Verfahren nach Anspruch 1, weiter umfassend Schritt (e) eines Beschichtens der essbaren beschichteten Komponente mit einer zweiten Flüssigkeit und Schritt (f) eines Auftragens einer zweiten trockenen Komponente zu besagter mit Flüssigkeit beschichteter Komponente aus Schritt (e).

4. Verfahren nach Anspruch 3, weiter umfassend Schritt (g) eines Trocknens des mit Flüssigkeit beschichteten Kerns nach Schritt (e) und/oder eines Trocknens der essbaren beschichteten Komponente nach Schritt (f).

5. Verfahren nach Anspruch 1, wobei besagte Basisflüssigkeit Glycerin, Salz, einen flüssigen Träger und vorgelatinisierte Stärke umfasst.

6. Verfahren nach Anspruch 1, wobei die trockene Komponente auf Basis von Fett, auf Basis von Teig, auf Basis von Milchprodukt, auf Basis von Protein, auf Basis von Getreide oder Mischungen von diesen ist.

7. Verfahren nach Anspruch 1, wobei die trockene Komponente Mehl, Emulgatoren und Enzyme umfasst.

8. Verfahren nach Anspruch 1, wobei der Garschritt (d) durchgeführt wird durch Backen bei einer Temperatur von 135°C bis 235°C für eine Dauer von weniger als 15 Minuten.

9. Verfahren nach Anspruch 8, weiter umfassend den Schritt eines Einfrierens des lagerstabilen, essbaren Snackprodukts vor dem Backschritt.

10. Verfahren nach Anspruch 1, wobei der essbare Kern ausgewählt wird aus der Gruppe bestehend aus Nüssen, Nussderivaten, Fleischprodukten, Fleischderivaten, Früchten, Früchtederivaten, Kekshäppchen, Crackern, Käse, Käsederivaten, Hülsenfrüchten, Joghurts, Joghurtderivaten, Tomatensoßen, Gemüse, Gemüsederivaten, Süßwaren und Mischungen derselben.

11. Verfahren nach Anspruch 1, wobei der essbare Kern eine Wasseraktivität aufweist, die kleiner als 0,8 bei einer Temperatur von 25°C ist.

12. Verfahren nach Anspruch 1, wobei die äußere Teigschicht ausgewählt wird aus der Gruppe bestehend aus Cracker, Brot, Keks, Muffin, Müsli, Zerealie, Weichbrezel und Mischungen derselben.

13. Verfahren nach Anspruch 1, wobei die Basisflüssigkeit Mehl, Hefe und Wasser umfasst.

14. Lagerstabiles, essbares Snackprodukt, erhältlich durch ein Verfahren nach Anspruch 1, welches umfasst:
einen essbaren Kern, der ausgewählt ist aus der Gruppe bestehend aus: Nüssen, Nussderivaten, Fleischprodukten, Fleischderivaten, Früchten, Früchtederivaten, Kekshäppchen, Crackern, Käse, Käsederivaten, Hülsenfrüchten, Joghurts, Joghurtderivaten, Tomatensoßen, Gemüse, Gemüsederivaten, Süßwaren und Mischungen derselben; und
eine äußere Teigschicht, die auf Basis von Mehl ist, wobei die äußere Teigschicht ein Minimum von 50 Gew.-% Mehl und weniger als 50 Gew.-% Sucrose basierend auf dem Gesamtgewicht der äußeren Teigschicht aufweist,
wobei die äußere Teigschicht im wesentlichen den essbaren Kern umgibt und die äußere Teigschicht nach dem Garen eine Wasseraktivität von 0,2 bis 0,8 bei einer Temperatur von 25°C aufweist, und wobei das lagerstabile, essbare Snackprodukt mikrobiologisch für wenigstens 2 Monate stabil ist.

15. Lagerstabiles, essbares Snackprodukt nach Anspruch 14, wobei die äußere Teigschicht nach dem Garen eine Wasseraktivität von 0,4 bis 0,75 bei einer Temperatur von 25°C aufweist.

16. Lagerstabiles, essbares Snackprodukt nach Anspruch 14, wobei die äußere Teigschicht Mehl, Stärke, Feuchthaltemittel, Teigkonditionierungsmittel, Enzym, Emulgator, Hefe, chemisches Treibmittel, Fett, Konservierungsmittel und Zucker umfasst.

## Revendications

1. Procédé de fabrication d'une collation comestible de longue conservation, comprenant les étapes qui consistent à :
(A) fournir une partie centrale comestible comportant une surface extérieure ; et à
(B) appliquer au moins une couche de pâte externe qui, en grande partie, recouvre ladite surface extérieure de ladite partie centrale comestible ; ladite couche de pâte externe présentant une activité de l'eau de 0,2 à 0,8 à 25°C et étant appliquée au moyen d'un procédé qui comprend les étapes consistant à :
(a) revêtir ladite surface extérieure de ladite partie centrale comestible d'un liquide de base, en formant ainsi une partie centrale revêtue de liquide ;
(b) appliquer un composant sec comportant de la farine sur ladite partie centrale revêtue de liquide, en formant ainsi une pièce comestible formée de couche ; et à
(c) éventuellement, (i) sécher ladite partie centrale revêtue de liquide après l'étape (a), (ii) sécher ladite pièce comestible formée de couche après l'étape (b), ou (iii) sécher ladite pièce comestible formée de couche après les étapes (a) et (b) ; et (d) faire cuire afin d'obtenir ladite collation comestible de longue conservation,
au moins une partie dudit composant sec étant traitée lors d'une étape de rôtissage avant ladite étape d'application.

2. Procédé selon la revendication 1, dans lequel ladite couche de pâte externe présente une activité de l'eau de 0,4 à 0,75 à 25°C.

3. Procédé selon la revendication 1, comprenant en outre l'étape (e) qui consiste à revêtir ladit pièce comestible formée de couche d'un second liquide et l'étape (f) qui consiste à appliquer un second composant sec sur ledit composant revêtu de liquide de l'étape (e).

4. Procédé selon la revendication 3, comprenant en outre l'étape (g) qui consiste à sécher ladite partie centrale revêtue de liquide après l'étape (e) et/ou à sécher ladite pièce comestible formée de couche après l'étape (i).

5. Procédé selon la revendication 1, dans lequel ledit liquide de base est composé de glycérine, de sel, d'un véhicule liquide, et d'amidon pré-gélatinisé.

6. Procédé selon la revendication 1, dans lequel ledit composant sec est à base de matière grasse, à base de pâte, à base de produit laitier, à base de protéines, à base de graines, ou des mélanges de ceux-ci.

7. Procédé selon la revendication 1, dans lequel ledit composant sec est composé de farine, d'émulsifiants et d'enzymes.

8. Procédé selon la revendication 1, dans lequel ladite étape de cuisson (d) est réalisée en cuisant au four à une température de 135°C à 235°C pendant une période inférieure à 15 minutes.

9. Procédé selon la revendication 8, comprenant en outre l'étape qui consiste à congeler ladite collation comestible de longue conservation avant ladite étape de cuisson au four.

10. Procédé selon la revendication 1, dans lequel ladite partie centrale comestible est choisie dans le groupe constitué par les fruits secs oléagineux, les dérivés de fruits secs oléagineux, les viandes, les dérivés de viandes, les fruits, les dérivés de fruits, les morceaux de gâteaux secs, les biscuits salés, le fromage, les dérivés de fromage, les légumineuses, les yaourts, les dérivés de yaourts, les sauces tomate, les légumes, les dérivés de légumes, les confiseries, et les mélanges de ceux-ci.

11. Procédé selon la revendication 1, dans lequel ladite partie centrale comestible présente une activité de l'eau qui est inférieure à 0,8 à une température de 25°C.

12. Procédé selon la revendication 1, dans lequel ladite couche de pâte externe est choisie dans le groupe constitué par un biscuit salé, un pain, un gâteau sec, un muffin, du müesli, une céréale, un bretzel mou, et des mélanges de ceux-ci.

13. Procédé selon la revendication 1, dans lequel ledit liquide de base comprend de la farine, de la levure et de l'eau.

14. Collation comestible de longue conservation que l'on peut obtenir par un procédé selon la revendication 1, comprenant :
une partie centrale comestible choisie dans le groupe constitué par : les fruits secs oléagineux, les dérivés de fruits secs oléagineux, les viandes, les dérivés de viandes, les fruits, les dérivés de fruits, les morceaux de gâteaux secs, les biscuits salés, le fromage, les dérivés de fromage, les légumineuses, les yaourts, les dérivés de yaourts, les sauces tomates, les légumes, les dérivés de légumes, les confiseries, et les mélanges de ceux-ci ; et
une couche de pâte externe qui est à base de farine, ladite couche de pâte externe comportant un minimim de 50 % en poids de farine et moins de 50 % en poids de saccharose par rapport au poids total de la couche de pâte externe,
ladite couche de pâte externe entourant en grande partie ladite partie centrale comestible et ladite couche de pâte externe après cuisson ayant une activité de l'eau de 0,2 à 0,8 à une température de 25°C, et ledit en-cas comestible de longue conservation étant microbiologiquement stable pendant au moins 2 mois.

15. Collation comestible de longue conservation selon la revendication 14, dans lequel ladite couche de pâte externe après cuisson présente une activité de l'eau de 0,4 à 0,75 à une température de 25°C.

16. Collation comestible de longue conservation selon la revendication 14, dans lequel ladite couche de pâte externe est composée de farine, d'amidon, d'humidifiant, d'améliorant de la pâte, d'enzyme, d'émulsifiant, de levure, de levure chimique, de matière grasse, de conservateur et de sucre.
